Europäisches Patentamt

European Patent Office

Office européen des brevets

(19)

(11) EP 0 658 258 B1

(12) EUROPÄISCHE PATENTSCHRIFT

(45) Veröffentlichungstag und Bekanntmachung des Hinweises auf die Patenterteilung:
27.11.1996 Patentblatt 1996/48

(21) Anmeldenummer: 93915686.5

(22) Anmeldetag: 05.08.1993

(51) Int Cl.6: G06F 11/16

(86) Internationale Anmeldenummer:
PCT/DE93/00686

(87) Internationale Veröffentlichungsnummer:
WO 94/06081 (17.03.1994 Gazette 1994/07)

(54) **NETZWERKSCHNITTSTELLE**

NETWORK INTERFACE

INTERFACE DE RESEAU

(84) Benannte Vertragsstaaten:
DE ES FR GB IT SE

(30) Priorität: 02.09.1992 DE 4229175

(43) Veröffentlichungstag der Anmeldung:
21.06.1995 Patentblatt 1995/25

(73) Patentinhaber: ROBERT BOSCH GMBH
70442 Stuttgart (DE)

(72) Erfinder:
• MOHR, Thomas
D-77815 Buehl (DE)
• SCHMIEDERER, Claus
D-77871 Renchen (DE)
• KERN, Robert
D-77887 Sasbachwalden (DE)
• DECKER, Gerhard
D-77855 Achern (DE)

(56) Entgegenhaltungen:
WO-A-90/01739

Bemerkungen:
Die Akte enthält technische Angaben, die nach dem Eingang der Anmeldung eingereicht wurden und die nicht in dieser Patentschrift enthalten sind.

# Beschreibung

Die Erfindung geht aus von einer Netzwerkschnittstelle nach der Gattung des Hauptanspruchs. Es ist schon eine Netzwerkschnittstelle aus der DE-OS 38 26 774, die WO-A-90/0 1739 entspricht, bekannt. Die dort beschriebene Netzwerkschnittstelle ist für die Verwendung beim sog. Controller Area Network (CAN) ausgelegt. Das CAN ist ein serielles Bussystem, welches vor allem für den Einsatz in Kraftfahrzeugen ausgelegt ist. Dabei werden die Informationen zwischen mehreren Netzwerkteilnehmern über eine Zweidrahtverbindung übertragen. Jeder Netzwerkteilnehmer enthält eine Netzwerkschnittstelle. Jede Netzwerkschnittstelle ist an die Zweidrahtverbindung angeschlossen. Jede Netzwerkschnittstelle besitzt einen Differenzempfänger, dessen Eingänge mit der Zweidrahtverbindung verknüpft sind. Bei Ausfall einer der beiden Signalleitungen durch Kurzschluß oder Unterbrechung, ist ein Zweidrahtempfang nicht mehr möglich. Die Netzwerkschnittstelle nach der DE-OS 38 26 774 ist so ausgelegt, daß sie Fehlzustände der obigen Art erkennt und dann vom Zweidrahtempfang auf Eindrahtempfang umschaltet. Sie legt dazu eine Eingangsleitung des Differenzempfängers auf ein festes Klemmpotential. Wenn daraufhin wieder ein Differenzempfang möglich ist, bleibt das Klemmpotential auf die Eingangsleitung aufgeschaltet und der Informationsempfang findet über die verbleibende Signalleitung statt. Andernfalls wird die andere Signalleitung mit dem Klemmpotential beaufschlagt und das Klemmpotential von der ersten Signalleitung gelöst. Danach kann der Informationsempfang über die andere Signalleitung stattfinden. In beiden Fällen wird das gleiche Klemmpotential an die jeweilige Signalleitung angelegt. Das Klemmpotential entspricht dabei dem Komparatormittenpotential. Im Eindrahtbetrieb der Netzwerkschnittstelle können Gleichtaktstörungen z.B. durch Masseversatz zwischen zwei Netzwerkteilnehmern nicht vollständig unterdrückt werden. Der zulässige Masseversatz ist durch den Spannungshub zwischen Klemmpotential und rezessivem Bitpegel auf einer der beiden Signalleitungen bestimmt.

## Vorteile der Erfindung

Die erfindungsgemäße Netzwerkschnittstelle mit den kennzeichnenden Merkmalen des Hauptanspruchs hat demgegenüber den Vorteil, daß der zulässige Masseversatz bei beiden Bitpegeln (rezessiv und dominant) gleich und maximal ist. Damit ist eine größere Sicherheitsreserve für die Datenübertragung erreicht. Dies ist vor allem für Bus-Verbindungen, die fehlertolerant ausgelegt sein sollen, z.B. bei der Verbindung von Steuergeräten in NKWs, wichtig.

Durch die in den Unteransprüchen aufgeführten Maßnahmen sind vorteilhafte Weiterbildungen und Verbesserungen der im Hauptanspruch angegebenen Netzwerkschnittstelle möglich.

Besonders vorteilhaft ist es, in der Netzwerkschnittstelle zwei steuerbare Schalter und ein Widerstandsnetzwerk vorzusehen und die Schalter so auszulegen, daß in ihrem ersten Schaltzustand jeweils eine Eingangsleitung an eine Busleitung angeschlossen wird und in ihrem zweiten Schaltzustand jeweils eine Eingangsleitung mit einem Punkt des Widerstandsnetzwerkes verbunden wird. Damit kann ohne großen Hardwareaufwand ein Eindrahtbetrieb der Netzwerkschnittstelle realisiert werden. Durch Auslegung der steuerbaren Schalter so, daß sie in ihrem einen Schaltzustand unterschiedliche Eingangsleitungen mit unterschiedlichen Punkten des Widerstandsnetzwerkes verbinden, wird es einfach möglich, unterschiedliche Klemmpotentiale an die Eingangsleitungen anzuschließen.

Weiterhin vorteilhaft ist es, das Widerstandsnetzwerk so auszulegen, daß, wenn beide Schalter ihr Klemmpotential auf die Eingangsleitung legen, der rezessive Bitpegel an den beiden Eingangsleitungen anliegt. Dadurch kann eine Netzwerkschnittstelle nach einem Bus Off-Zustand unabhängig vom Busverkehr schneller wieder am Busverkehr teilnehmen. Das CAN-Protokoll schreibt nämlich eine Mindestanzahl von Bitpegelabtastungen mit rezessivem Bitpegel vor, bevor eine Netzwerkschnittstelle einen Bus Off-Zustand verlassen darf. Ebenfalls vorteilhaft ist es, für jede Eingangsleitung einen Spannungsteiler vorzusehen. Damit können die Pegelhübe an den Arbeitsbereich des Differenzempfängers angepaßt werden.

## Zeichnung

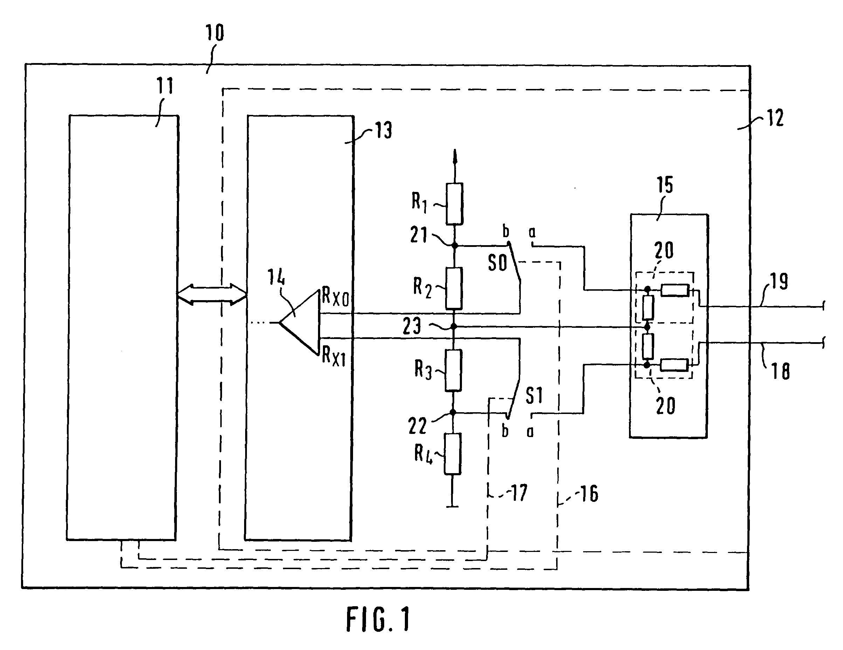

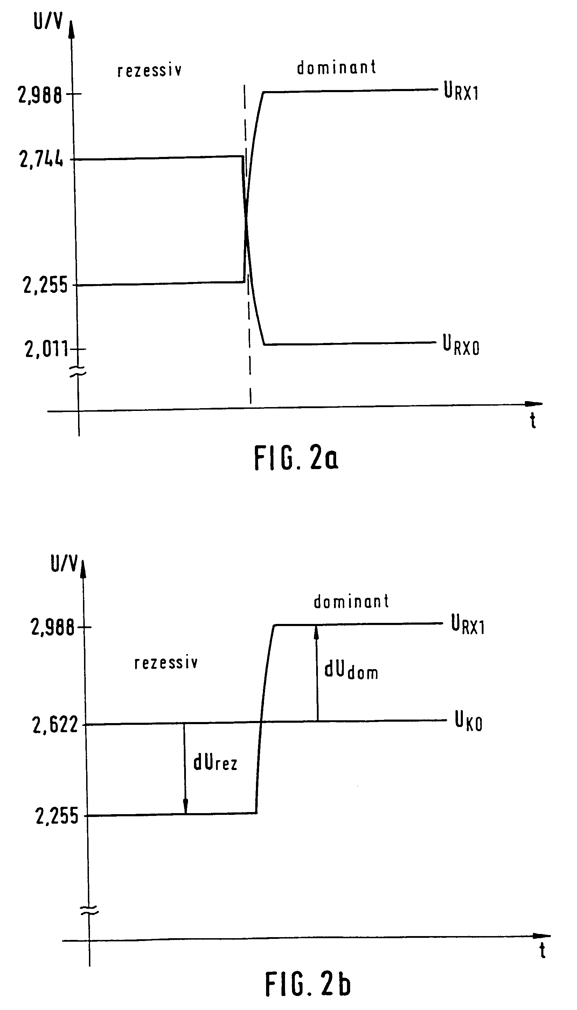

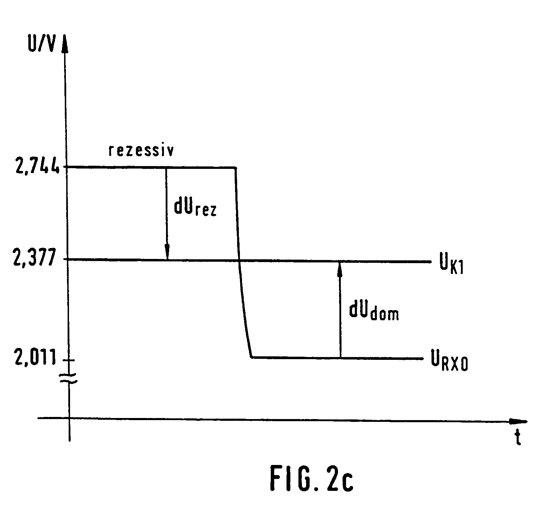

Es zeigen Figur 1 eine schematische Darstellung eines Steuergerätes mit einer erfindungsgemäßen Netzwerkschnittstelle; Figur 2a die Bitpegel im Zweidrahtbetrieb der erfindungsgemäßen Netzwerkschnittstelle; Figur 2b die Bitpegel und das Klemmpotential für einen ersten Eindrahtbetrieb einer erfindungsgemäßen Netzwerkschnittstelle und Figur 2c die Bitpegel und das Klemmpotential für den zweiten Eindrahtbetrieb der erfindungsgemäßen Netzwerkschnittstelle.

## Beschreibung

Ein Ausführungsbeispiel der Erfindung ist in der Zeichnung dargestellt und in der nachfolgenden Beschreibung näher erläutert. In Figur 1 ist ein Steuergerät 10 dargestellt. Das Steuergerät ist im folgenden nicht näher spezifiziert, da dies für den Erfindungsgegenstand unerheblich ist. Typische Steuergeräte, bei denen die Erfindung eingesetzt sein kann, sind Kraftfahrzeug-Steuergeräte wie Zünd-, Einspritz-, Brems-, Getriebe-Steuergeräte, usw., aber auch Komfort- und Karosserie-Elektroniken. Das Steuergerät ist zum Datenaustausch mit weiteren Steuergeräten an zwei Busleitungen 18, 19 angeschlossen. Das Steuergerät enthält einen Mikrorechner 11 und eine Netzwerkschnittstelle 12. Die Netzwerkschnittstelle enthält einen CAN-Baustein 13. Als CAN-Baustein 13 kann z.B. der kommerziell erhältliche 82C200 von der Firma Motorola eingesetzt werden. Mikrorechner 11 und CAN-Baustein 13 stehen über einen Bus miteinander in Verbindung. Der CAN-Baustein 13 enthält einen Differenzempfänger 14. An den RX0-Eingang des Differenzempfängers 14 ist ein steuerbarer Schalter S0 angeschlossen. An den RX1-Eingang des Differenzempfängers 14 ist ein steuerbarer Schalter S1 angeschlossen. Beide Schalter S0, S1 können als FET-Schalter ausgelegt sein. Sie sind über Steuerleitungen 16, 17 mit dem Mikrorechner 11 verbunden. Die Schalter S0, S1 werden mit einem Signal auf den Steuerleitungen 16, 17 betätigt. Beide Schalter S0, S1 besitzen zwei Schaltzustände a und b. Der Schalter S0 verbindet in seinem ersten Schaltzustand a den RX0-Eingang des Differenzempfängers 14 mit einem ersten Eingang eines Busankoppelnetzwerkes 15. Der Schalter S1 verbindet in seinem ersten Schaltzustand a den RX1-Eingang des Differenzempfängers 14 mit einem zweiten Eingang des Busankoppelnetzwerkes 15. Der Schalter S0 verbindet in seinem zweiten Schaltzustand b den RX0-Eingang des Differenzempfängers 14 mit einem ersten Punkt 21 eines Widerstandsnetzwerkes. Der Schalter S1 verbindet in seinem zweiten Schaltzustand b den RX1-Eingang des Differenzempfängers 14 mit einem zweiten Punkt 22 des Widerstandsnetzwerkes. Das Widerstandsnetzwerk besteht aus vier in Reihe geschalteten Widerständen R1 bis R4. Der Widerstand R1 ist an die Versorgungsspannung UB der Netzwerkschnittstelle 12 angeschlossen und der Widerstand R4 ist an Masse angeschlossen. Der erste Verbindungspunkt 21 des Widerstandsnetzwerkes ist der Verbindungspunkt zwischen den Widerständen R1 und R2 und der zweite Verbindungspunkt 22 ist der Verbindungspunkt zwischen den beiden Widerständen R3 und R4. Der Verbindungspunkt zwischen den Widerständen R2 und R3 ist mit einem dritten Eingang des Busankoppelnetzwerkes 15 verbunden. Das Busankoppelnetzwerk 15 enthält zwei Spannungsteiler 20. Der Spannungsteiler 20, der über den ersten Schaltzustand a des Schalters S0 mit dem RX0-Eingang des Differenzempfängers verbunden wird, ist mit der Busleitung 19 verknüpft. Der Spannungsteiler 20, der über den ersten Schaltzustand a des Schalters S1 mit dem RX1-Eingang des Differenzempfängers 14 verbunden ist, ist mit der Busleitung 18 verknüpft.

Die Funktionsweise der Netzwerkschnittstelle 12, soweit sie für die Erfindung wesentlich ist, wird im folgenden anhand der Figuren 2a bis 2c erläutert. Im Normalbetrieb der Netzwerkschnittstelle sind beide Schalter S0 und S1 im Schaltzustand a. Findet eine Datenübertragung über die Busleitungen 18, 19 zur Netzwerkschnittstelle 12 statt, so sehen die Signalpegel für die einzelnen Bits am RX0- und RX1-Eingang des Differenzempfängers 14 wie in Figur 2a dargestellt aus. Beim CAN wird zwischen rezessivem und dominantem Bitpegel unterschieden. Dabei kann ein rezessiver Bitpegel durch ein ebenfalls an den Busleitungen 18, 19 anliegenden dominanten Bitpegel überschrieben werden. Für das konkrete Beispiel der Figur 2a ist der Spannungswert beim rezessiven Bitpegel am RX0-Eingang 2,744V und am RX1-Eingang 2,255V. Die Spannungspegel beim dominanten Bitpegel sind 2,011V am RX0-Eingang und 2,988V am RX1-Eingang. Da der Differenzempfänger 14 die Differenz der Spannungspegel am RX0- und RX1-Eingang bildet, ist der Bitpegel über den Schaltzustand am Ausgang des Differenzempfängers 14 abgreifbar. Im Normalbetrieb der Zweidrahtschnittstelle 12 wirken sich Gleichtaktstörungen auf den Busleitungen 18, 19 nicht schädlich aus.

Zur Fehlererkennung sendet ein Netzwerkteilnehmer (Master) in einem bestimmten Zeitraster eine Testbotschaft an alle weiteren Netzwerkteilnehmer (Slaves) ab. Dies wird vom Mikrorechner 11 überwacht. Dazu kann z.B. ein Zähler, der auch in Software realisiert sein kann, im Mikrorechner 11 vorgesehen sein. Dieser Zähler zählt im Normalbetrieb ständig aufwärts. Nur dann, wenn die Testbotschaft mit allen Fehlererkennungsmaßnahmen, wie Bit-Fehler-, CRC-Fehler-, Bit-Stuffing-Fehler- und Formatfehlererkennung vollständig empfangen wurde, wird der Zähler zurückgesetzt. Die einzelnen Fehlererkennungsmaßnahmen werden dabei von der Netzwerkschnittstelle getroffen. Überschreitet nun der Zähler einen bestimmten Wert, so interpretiert der Mikrorechner 11 dies als Fehler und legt daraufhin den Schalter S0 über ein Signal auf der Steuerleitung 16 um. Daraufhin ist Eingangsleitung RX0 mit dem Klemmpotential UK0 = 2,622V beaufschlagt.

Ist die dieser Leitung zugeordnete Busleitung 19 tatsächlich kurzgeschlossen, so kann ein Datenempfang noch über die intakte Busleitung 18 stattfinden, wie in Figur 2b dargestellt. Der Differenzempfänger 14 schaltet dann wieder für rezessiven und dominanten Bitpegel ordnungsgemäß. Das Klemmpotential UK0 ist mittig zwischen die Spannungspegel für rezessiven und dominanten Bitpegel auf Eingangsleitung RXI gelegt; d. h. dU(rez) = dU(dom). Der Wert für UK0 berechnet sich nach der Formel

$$UK0 = (URX1(dom)+URX1(rez))/2.$$

Wird nun eine Gleichtaktstörung über die Busleitung 18 z.B. durch Masseversatz zwischen zwei Netzwerkteilnehmern auf die Eingangsleitung RX1 übertragen, so wird die Datenübertragung so lange nicht verhindert, wie sie kleiner als dU(rez) bzw. dU(dom) ist.

Ist die Busleitung 19 nicht kurzgeschlossen, so findet erneut kein Datenempfang statt und der Zähler erreicht nochmals den bestimmten Wert. Daraufhin gibt der Mikrorechner 11 Signale über die Steuerleitungen 16, 17 an die Schalter S0 und S1 ab. Diese werden dadurch umgeschaltet. Somit liegt jetzt eine Klemmenspannung UK1 am RXI-Eingang des Differenzempfängers 14 an und der Datenempfang findet über die Eingangsleitung RX0 statt. Dies ist in Figur 2c dargestellt.

Das Klemmpotential UK1 ist wieder mittig zwischen die Spannungspegel für rezessiven und dominanten Bitpegel auf der Eingangsleitung RX0 gelegt. Der Wert für UK1 berechnet sich nach der Formel

$$UK1 = (URX0(dom)+URX0(rez))/2.$$

Er beträgt 2,377V. Der zulässige Masseversatz zwischen zwei Netzwerkteilnehmern beträgt hier ebenfalls dU(rez) bzw. dU(dom).

Die in Figur 2b und 2c angegebenen Spannungswerte für UK0 und UK1 ergeben sich bei UB = 5V und wenn zusätzlich die Widerstände des Widerstandsnetzwerkes wie folgt gewählt sind:
R1 = R4 = 442 Ohm und R2 = R3 = 23,3 Ohm.

Erreicht der Zähler auch jetzt noch den bestimmten Wert, so konnte die Netzwerkschnittstelle den Datenempfang nicht wieder herstellen. Dies ist z.B. dann der Fall, wenn beide Busleitungen 18, 19 defekt sind. In diesem Fall nimmt die Netzwerkschnittstelle 12 einen Bus Off-Zustand ein. Darin ist die Netzwerkschnittstelle 12 passiv, d.h. sie darf weder Daten vom Bus empfangen, noch Daten auf den Bus übertragen. Erst wenn eine Reset-Anforderung von Seiten des Mikrorechners 12 vorliegt, versucht die Netzwerkschnittstelle 12 wieder am Busverkehr teilzunehmen. Nach dem CAN-Protokoll muß die Netzwerkschnittstelle 12 aber erst 128 Mal 11 aufeinanderfolgende Bits mit rezessivem Bitpegel empfangen haben, bevor sie wieder Daten auf den Bus ausgeben darf. Liegt die Reset-Anforderung vor, schaltet der Mikrorechner 11 beide Schalter S0, S1 in Stellung a. Damit ist der rezessive Bitpegel fest auf den Differenzempfänger 14 aufgeschaltet und die Netzwerkschnittstelle 12 kann schnell die Bedingung des CAN-Protokolls erfüllen. Sie nimmt also nach einem Bus Off-Zustand schnell wieder am Busverkehr teil.

**Patentansprüche**

1. Netzwerkschnittstelle für einen zwei Busleitungen aufweisenden seriellen Bus, insbesondere für einen Bus in Kraftfahrzeugen, mit einem Differenzempfänger, an den zwei Eingangsleitungen angeschlossen sind, wobei jede Eingangsleitung an eine der beiden Eusleitungen angeschlossen ist, mit Mitteln zur Erkennung von Fehlzuständen bei der digitalen Übertragung von Daten über den Bus, insbesondere Kurzschluß- oder Unterbrechungszustände bei den Busleitunçen, mit Mitteln zur Wiederherstellung des Empfangs von Daten, nachdem ein Fehlzustand erkannt wurde, wobei die Mittel eine der mindestens zwei Eingangsleitungen auf ein Klemmpotential schalten und der Datenempfang über die nicht mit dem Klemmpotential beschaltete Eingangsleitung fortgeführt wird, dadurch gekennzeichnet, daß die Netzwerkschnittstelle (12) erste weitere Mittel aufweist, die den Betrag der Spannungsdifferenz zwischen beiden Eingangsleitungen (RX0, RX1) bei fehlerfreiem Betrieb für beide Bitpegel, d.h. für den rezessiven und den dominanten Bitpegel (rez, dom) unterschiedlich groß einstellen und daß die Netzwerkschnittstelle (12) zweite weitere Mittel (R1, R2, R3, R4, S0, S1) aufweist, die das Klemmpotential (UK0, UK1) für die jeweilige Eingangsleitung (RX0, RX1) gemäß den Formeln

$$UK0 = (U_{RX1}(dom) + U_{RX1}(rez)) / 2$$

und

$$UK1 = (U_{RX0}(dom) + U_{RX0}(rez)) / 2$$

einstellen, wobei $U_{RX1}(dom)$ und $U_{RX1}(rez)$ das jeweilige Eingangspotential für einen der beiden Bitpegel (rez, dom) an der einen Eingangsleitung (RX1) und $U_{RX0}(dom)$ und $U_{RX0}(rez)$ das jeweilige Eingangspotential für einen der beiden Bitpegel (rez, dom) an der anderen Eingangsleitung (RX0) darstellt.

2. Netzwerkschnittstelle nach Anspruch 1, dadurch gekennzeichnet, daß als Mittel zur Wiederherstellung des Empfangs zwei steuerbare Schalter (S0, S1) vorhanden sind, die in ihrem ersten Schaltzustand (a) jeweils eine Eingangsleitung (RX0, RX1) an eine Busleitung (18, 19) anschließen und in ihrem zweiten Schaltzustand (b) jeweils eine Eingangsleitung (RX0, RX1) mit einem Punkt eines Widerstandsnetzwerkes (R1, R2, R3, R4) verbinden.

3. Netzwerkschnittstelle nach Anspruch 2, dadurch gekennzeichnet, daß der erste Schalter (S0) die erste Eingangsleitung (RX0) mit einem anderen Punkt des Widerstandsnetzwerkes verbindet als der zweite Schalter (S1) die zweite Eingangsleitung (RX1).

4. Netzwerkschnittstelle nach einem der Ansprüche 2 oder 3, dadurch gekennzeichnet, daß das Widerstandsnetzwerk (R1, R2, R3, R4) so ausgelegt ist, daß für den Fall, daß beide Schalter (S0, S1) in Stellung (b) gebracht sind, ein rezessiver Bitpegel an den beiden Eingangsleitungen (RX0, RX1) anliegt.

5. Netzwerkschnittstelle nach einem der vorhergehenden Ansprüche, dadurch gekennzeichnet, daß zwischen Eingangsleitungen (RX0, RX1) und Busleitungen (18, 19) ein Busankoppelnetzwerk (15) geschaltet ist.

6. Netzwerkschnittstelle nach Anspruch 5, dadurch gekennzeichnet, daß das Busankoppelnetzwerk (15) zwei Eingangsspannungsteiler (20) enthält, an die die mindestens zwei Busleitungen (18, 19) angeschlossen sind.

## Claims

1. Network interface for a serial bus having at least two bus lines, especially for a bus in motor vehicles, having a differential receiver to which at least two input lines are connected, each input line being connected to one of the two bus lines, having means for recognizing error states in the digital transmission of data via the bus, especially short-circuit or interruption states in the bus lines, having means for reproducing the reception of data after an error state has been recognized, the means switching one of the at least two input lines to a terminal potential and the data reception being continued via that input line which is not connected to the terminal potential, characterized in that the network interface (12) has first further means which set the magnitude of the voltage difference between two input lines (RX0, RX1) during error-free operation to a different magnitude for both bit levels, that is to say for the recessive and the dominant bit level, (rec, dom), and in that the network interface (12) has second further means (R1, R2, R3, R4, S0, S1) which set the terminal potential (UK0, UK1) for the respective input line (RX0, RX1) in accordance with the formulae:

$$UK0 = (U_{RX1}(dom) + U_{RX1}(rec)) / 2$$

and

$$UK1 = (U_{RX0}(dom) + U_{RX0}(rec)) / 2$$

$U_{RX1}(dom)$ and $U_{RX1}(rec)$ representing the respective input potential for one of the two bit levels (rec, dom) on the one input line (RX1), and $U_{RX0}(dom)$ and $U_{RX0}(rec)$ representing the respective input potential for one of the two bit levels (rec, dom) on the other input line (RX0).

2. Network interface according to Claim 1, characterized in that two controllable switches (S0, S1) are provided as the means for reproducing the reception, which switches (S0, S1) connect in each case at least one input line (RX0, RX1) to one bus line (18, 19) in their first switching state (a), and connect in each case at least one input line (RX0, RX1) to a point of a resistor network (R1, R2, R3, R4) in their second switching state (b).

3. Network interface according to Claim 2, characterized in that the first switch (S0) connects the first input line (RX0) to a different point on the resistor network from that to which the second switch (S1) connects the second input line (RX1).

4. Network interface according to one of Claims 2 or 3, characterized in that the resistor network (R1, R2, R3, R4) is designed such that a recessive bit level is present on the two input lines (RX0, RX1) for the case in which both switches (S0, S1) have been moved into position (b).

5. Network interface according to one of the preceding Claims, characterized in that a bus coupling network (15) is connected between the input lines (RX0, RX1) and the bus lines (18, 19).

6. Network interface according to Claim 5, characterized in that the bus coupling network (15) contains two input voltage dividers (20), to which the at least two bus lines (18, 19) are connected.

## Revendications

1. Interface de réseau pour un bus série présentant deux lignes de bus, en particulier pour un bus placé dans un véhicule automobile, comportant :

   - un récepteur différentiel auquel sont reliées deux lignes d'entrée, chaque ligne d'entrée étant reliée à l'une des deux lignes de bus,
   - un moyen de reconnaissance d'états d'erreur dans la transmission numérique de données par le bus, en particulier des états de court-circuit ou de coupure des lignes de bus,
   - des moyens pour rétablir la réception des données après que soit détecté l'état de panne, ces moyens commutant au moins l'une des deux lignes d'entrée sur un potentiel de blocage et effectuant la réception des données par la ligne d'entrée qui n'est pas reliée au potentiel de blocage,

   caractérisée en ce que l'interface de réseau (12) présente d'autres premiers moyens qui instaurent un rapport de différence de tension suffisamment grand entre les deux lignes d'entrée (RX0, RX1) lors de l'utilisation sans erreur des deux niveaux de bit, c'est-à-dire pour le niveau de bit récessif et le niveau de bit dominant (récess, dom), et en ce que l'interface de réseau (12) présente d'autres seconds moyens (R1, R2, R3, R4, S0, S1) qui établissent le potentiel de blocage pour les lignes d'entrée correspondante, selon les formules :

$$UKO = (U_{RX1}(dom) + (U_{RX1}(récess)) / 2$$

et

$$UK1 = (U_{RX0}\,(dom) + U_{RX0}(récess)) / 2$$

$U_{RX1}(dom)$ et $U_{RX1}(récess)$ représentent le potentiel d'entrée pour les deux niveaux de bit (récess, dom) à l'une des lignes d'entrée, (RX1) et $U_{RXO}$ (dom) et $U_{RX0}$ (récess) représentent le potentiel d'entrée correspondant à l'un des deux niveaux de bit (récess, dom) à l'autre ligne d'entrée (RXO).

2. Interface de réseau selon la revendication 1, caractérisée en ce que l'on prévoit deux commutateurs commandés (S0, S1) pour le rétablissement de la réception, ces commutateurs reliant dans leur premier état de commutation (a) chacune des lignes d'entrée (RX0, RX1) à une ligne de bus (18, 19) et, dans leur second état de commutation (b), chacune des lignes d'entrée (RX0, RX1) à un point d'un réseau de résistances (R1, R2, R3, R4).

3. Interface de réseau selon la revendication 2, caractérisée en ce que le premier commutateur (S0) relie la première ligne d'entrée (RX0) à un autre point du réseau de résistances que le point auquel le second commutateur relie la seconde ligne d'entrée (RX1).

4. Interface de réseau selon l'une des revendications 2 ou 3, caractérisée en ce que le réseau de résistances (R1, R2, R3, R4) est réalisé de sorte que, dans le cas où les deux commutateurs (S0, S1) sont dans la position (b), un niveau de bit récessif soit appliqué aux deux lignes d'entrée (RX0, RX1).

5. Interface de réseau selon l'une des revendications précédentes, caractérisée en ce qu'un réseau de couplage au bus (15) se trouve branché entre les lignes d'entrée (RX0, RX1) et les lignes de bus (18, 19).

6. Interface de réseau selon la revendication 5, caractérisée en ce que le réseau de couplage au bus (15) comporte un diviseur de tension d'entrée (20) auquel sont reliées au moins deux lignes de bus.

FIG.1

EP 0 658 258 B1

FIG. 2a

FIG. 2b

FIG. 2c